(19) **Europäisches Patentamt / European Patent Office / Office européen des brevets**

(11) **EP 4 752 173 A1**

(12) **EUROPEAN PATENT APPLICATION**
published in accordance with Art. 153(4) EPC

(43) Date of publication:
03.06.2026 Bulletin 2026/23

(21) Application number: 24845687.3

(22) Date of filing: 26.07.2024

(51) International Patent Classification (IPC):
C08L 23/08 (2025.01)    B32B 27/28 (2006.01)
C08K 3/22 (2006.01)    C08K 5/098 (2006.01)
C08L 23/02 (2025.01)    C08L 29/04 (2006.01)

(52) Cooperative Patent Classification (CPC):
B32B 27/28; C08K 3/22; C08K 5/098; C08L 23/02;
C08L 23/08; C08L 29/04

(86) International application number:
PCT/JP2024/026737

(87) International publication number:
WO 2025/023313 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.07.2023 JP 2023122592
27.07.2023 JP 2023122593

(71) Applicant: Mitsubishi Chemical Corporation
Tokyo 100-8251 (JP)

(72) Inventor: TERAOKA Kota
Tokyo 100-8251 (JP)

(74) Representative: Hoffmann Eitle
Patent- und Rechtsanwälte PartmbB
Arabellastraße 30
81925 München (DE)

(54) **RESIN COMPOSITION, RESIN COMPOSITION FOR RECOVERY AID, USE IN RECOVERY AID, REGRIND LAYER, MULTILAYER STRUCTURE, PACKAGE, FOOD PACKAGE, RECOVERY AID, AND METHOD FOR PRODUCING REGRIND LAYER**

(57)    The following is provided as a resin composition having excellent thermal stability and coloring suppression properties.

A resin composition (X) comprising an ethylene-vinyl acetate copolymer (A), wherein the ethylene-vinyl acetate copolymer (A) contains carbon-14.

EP 4 752 173 A1

**Description**

Technical Field

The present disclosure relates to a resin composition, a resin composition for a recycling agent, use in a recycling agent, a regrind layer, a multilayer structure, a package, a food package, and methods for producing a recycling agent and a regrind layer.

Background Art

Ethylene-vinyl alcohol copolymers having ethylene contents of 60 mol% or less (hereinafter, referred to as "EVOH") have been mainly used as food packaging materials in the art because of having excellent gas barrier properties and transparency. The sheet, film, and the like used as a food packaging material can be produced from the EVOH alone, but the EVOH may also be blended with another thermoplastic resin to improve physical properties and the like, or the sheet, film, and the like may be used by being formed into a multilayer structure in which layers made of a polyolefin resin and the like are laminated in order to impart other functions.

Recently, for the purpose of reducing the environmental load, a used resin product, resin scraps or ends generated in the process of producing a resin product, or defective products are collected and recycled to produce a resin composition containing an EVOH and a polyolefin again from the collected materials.

However, unfortunately, when melt molding is repeated using a resin composition containing EVOH and polyolefin, deterioration in quality of the resin composition occurs due to the effect of thermal history.

Thus, as a resin composition that is less likely to be affected by repeated thermal history, for example, a resin composition containing an ethylene-vinyl acetate copolymer (hereinafter, referred to as "EVA") and a saponified EVA having an ethylene content of greater than 60 mol% has been proposed (see Patent Document 1 listed below).

Meanwhile, as a resin composition in which carbon emissions are reduced compared to a raw material produced by using only a fossil fuel source, a substance containing an EVA derived from a biomass resource has been proposed (see Patent Document 2 listed below).

Citation List

Patent Literature

Patent Document 1: WO 2009/041440 A
Patent Document 2: JP 2021-536526 T

Summary

Technical Problem

The present disclosure provides a resin composition having excellent thermal stability and suppressed coloring.

Solution to Problem

As a result of diligent research in response to the issue described above, the inventor of the present disclosure found that the issue is solved by using, for a resin composition containing an EVA and a saponified EVA, a material in which an EVA and/or a saponified EVA contains carbon-14 ($^{14}$C (radioactive carbon-14; half-life: 5730 years)).

That is, the present disclosure provides the following aspects.

[1] A resin composition (X) comprising an EVA (A),
wherein the EVA (A) contains carbon-14.
[2] A resin composition (X) comprising:

an EVA (A); and
a saponified EVA (B) having an ethylene content of greater than 60 mol%,
wherein the EVA (A) and/or the saponified EVA (B) containing carbon-14.

[3] The resin composition (X) according to [2], wherein the EVA (A) contains carbon-14.

[4] The resin composition (X) according to [2], wherein a biobased content of the EVA (A) and/or the saponified EVA (B) having an ethylene content of greater than 60 mol% is from 1 to 100%.

[5] The resin composition (X) according to any one of [1] to [4], wherein a biobased content of the EVA (A) is from 1 to 100%.

[6] The resin composition (X) according to any one of [1] to [4], wherein a biobased content of the EVA (A) is from 40 to 100%.

[7] The resin composition (X) according to any one of [1] to [6], wherein an ethylene content of the EVA (A) is from 60 to 98 mol%.

[8] A resin composition for a recycling agent, the resin composition comprising the resin composition (X) according to any one of [1] to [7].

[9] Use of the resin composition (X) according to any one of [1] to [7] for a recycling agent.

[10] A recycling agent comprising the resin composition (X) according to any one of [1] to [7].

[11] The resin composition (X) according to any one of [1] to [7], further comprising a polyolefin resin (C).

[12] The resin composition (X) according to any one of [1] to [7], further comprising an EVOH (D) having an ethylene content of 60 mol% or less.

[13] A resin composition (Y) comprising:

an EVA (A);
a polyolefin resin (C); and
an EVOH (D),
wherein the EVA (A) contains carbon-14.

[14] A resin composition (Y) comprising:

an EVA (A);
a saponified EVA (B) having an ethylene content of greater than 60 mol%;
a polyolefin resin (C); and
an EVOH (D),
wherein the EVA (A) and/or the saponified EVA (B) contains carbon-14.

[15] The resin composition (Y) according to [13] or [14], further comprising hydrotalcites (E).

[16] The resin composition (Y) according to any one of [13] to [15], further comprising a higher fatty acid metal salt (F).

[17] The resin composition (Y) according to [16], wherein the higher fatty acid metal salt (F) is at least one selected from the group consisting of a higher fatty acid calcium salt, a higher fatty acid magnesium salt, and a higher fatty acid zinc salt.

[18] The resin composition (Y) according to any one of [13] to [17], further comprising a titanium compound (G).

[19] The resin composition (Y) according to [18], where the titanium compound (G) is titanium oxide.

[20] A regrind layer comprising the recycling agent according to [10].

[21] A multilayer structure comprising the regrind layer according to [20].

[22] The multilayer structure according to [21], further comprising a layer containing a polyolefin resin, with a proviso that the layer does not contain the EVA (A).

[23] The multilayer structure according to [21] or [22], further comprising an adhesive resin layer that is different from the regrind layer, with a proviso that the adhesive resin layer does not contain the EVA (A).

[24] A package comprising the multilayer structure according to any one of [21] to [23].

[25] A food package comprising the multilayer structure according to any one of [21] to [23].

[26] A method for producing a recycling agent, the method comprising mixing an EVA (A) and a saponified EVA (B) having an ethylene content of greater than 60 mol%,
wherein the EVA (A) and/or the saponified EVA (B) contains carbon-14.

[27] A method for producing a regrind layer by forming a resin composition, the method comprising mixing a polyolefin resin (C), an EVOH (D), an EVA (A), and a saponified EVA (B) having an ethylene content of greater than 60 mol%, wherein the resin composition contains the EVA (A) and/or the saponified EVA (B) containing carbon-14.

Advantageous Effects of Invention

The resin composition (X) that is an aspect of the present disclosure has excellent thermal stability and coloring suppression properties among resin compositions containing an EVA or resin compositions containing an EVA and a saponified EVA. Therefore, the resin composition (X) of the present disclosure itself can be suitably used as a raw material for a molded body or a multilayer structure, which have excellent thermal stability and coloring suppression properties.

Furthermore, the resin composition (X) can be suitably used as a recycling agent that maintains a specific quality by enhancing thermal stability of a recycled resin composition when a used resin product or resin scraps that are discarded in a production process and the like, containing polyolefin resins and EVOH, are collected and recycled.

Furthermore, the resin composition (Y), which is another aspect of the present disclosure, is a resin composition containing a polyolefin resin and an EVOH and has excellent thermal stability and excellent coloring suppression properties. Therefore, the resin composition (Y) of the present disclosure itself can be suitably used as a raw material for a molded body or a multilayer structure, which have excellent thermal stability and coloring suppression properties.

The resin composition (Y) is especially suitable as a recycled resin composition using, as a polyolefin resin and an EVOH, a material produced by collecting a used resin product or resin scraps that are discarded in a production process and the like. This is because thermal deterioration does not occur and a specific quality is maintained.

Description of Embodiments

Hereinafter, the present disclosure will be described in more detail based on embodiments of the present disclosure, but the present disclosure is not limited to the following embodiments.

In the present specification, unless otherwise specified, the expression "from x to y" (with x and y being any numbers) includes the meaning of "x or greater and y or less" and the meaning of "preferably greater than x" or "preferably smaller than y".

In addition, when the expression "X or greater" (X is any number) or "Y or less" (Y is any number) is used, the expression also includes the meaning of "preferably greater than X" or "preferably less than Y".

Further, an expression of "X and/or Y (where X and Y are any configurations)" means at least one of X or Y, and has three meanings including X only, Y only, and both X and Y.

In addition, in the present specification, the term "film" means to include a "tape" and a "sheet".

In the present specification, for numerical ranges described stepwise, the upper limit value or the lower limit value of a numerical range of a certain step can be freely combined with the upper limit value or the lower limit value of a numerical range of another step. In addition, in a numerical range described in the present specification, the upper limit value or the lower limit value of the numerical range can be replaced with a value shown in Examples.

The resin composition (X), which is the first aspect of the present disclosure, (hereinafter, referred to as "the present resin composition (X)") is a resin composition (X) containing an EVA (A), where the EVA (A) contains carbon-14, and the present resin composition (X) is a resin composition (X) containing an EVA (A) and a saponified EVA (B) having an ethylene content of greater than 60 mol%, where the EVA (A) and/or the saponified EVA (B) contains carbon-14.

Next, the resin composition (Y), which is the second aspect of the present disclosure, (hereinafter, referred to as "the present resin composition (Y)") is a resin composition (Y) containing an EVA (A), a polyolefin resin (C), and an EVOH (D), where the EVA (A) contains carbon-14, and the present resin composition (Y) is a resin composition (Y) containing an EVA (A), a saponified EVA (B), a polyolefin resin (C), and an EVOH (D), where the EVA (A) and/or the saponified EVA (B) contains carbon-14.

The first and second aspects will be described below in order.

First Aspect

The present resin composition (X) is any one of the resin composition (X) containing an EVA (A), where the EVA (A) contains carbon-14, or the resin composition (X) containing an EVA (A) and a saponified EVA (B) having an ethylene content of greater than 60 mol%, where the EVA (A) and/or the saponified EVA (B) contains carbon-14.

Because the present resin composition (X) is suitably used as a recycling agent, the present resin composition (X) can be used as a resin composition for a recycling agent (hereinafter, referred to as "the present resin composition for a recycling agent").

Hereinafter, the respective components will be described.

EVA (A)

The term "EVA" in the EVA (A) used in the present resin composition (X) means a polymer produced by copolymerization of ethylene and vinyl acetate. In the present resin composition (X), an EVA (A) and/or a saponified EVA (B) having an ethylene content of greater than 60 mol% contains carbon-14, and the EVA (A) especially preferably contains carbon-14.

The carbon-14-containing EVA refers to a chemically or biologically synthesized EVA produced by using a recyclable biomass resource as a raw material (hereinafter, referred to as "bio EVA"). A characteristic of the bio EVA is that due to the carbon neutrality of the biomass, even when incinerated, the bio EVA does not increase the carbon dioxide concentration in the atmosphere.

Carbon-14 is not contained in the carbons of a petroleum-derived EVA but in those of the bio EVA. Thus, $^{14}$C concentration, which is measured by accelerator mass spectroscopy, can be used as an indicator of content proportion (biobased content) or presence/absence of the bio EVA.

Among the biomass resources described above, a plant material is preferred and, for example, use of a plant material-derived ethylene derived from a bioalcohol and a plant material-derived vinyl acetate are preferred. That is, the carbon-14-containing EVA (A) is preferably a plant material-derived EVA.

The biobased content described above can be measured by the following method, for example. A sample to be measured is combusted to generate carbon dioxide, and the carbon dioxide purified in a vacuum line is reduced with hydrogen using iron as a catalyst to thereby generate graphite. The graphite is then placed in a tandem accelerator-based $^{14}$C-AMS dedicated device (available from NEC Corporation), the $^{14}$C is counted, the $^{13}$C concentration ($^{13}$C/$^{12}$C) and the $^{14}$C concentration ($^{14}$C/$^{12}$C) are measured, and the proportion of the $^{14}$C concentration of the sample carbon relative to standard modern carbon is calculated from the measured values.

The biobased content of the EVA (A) used in the present resin composition (X) is usually from 1 to 100%, preferably from 5 to 100%, more preferably from 10 to 100%, even more preferably from 40 to 100%, and particularly preferably from 60 to 90%. By setting the biobased content of the EVA (A) to the aforementioned range, a resin composition (X) having better thermal stability can be produced.

The reason why the present resin composition (X) is excellent in thermal stability and coloring suppression properties is presumably that, compared to a petroleum-derived EVA containing no carbon-14, the carbon-14 ($^{14}$C)-containing bio EVA exhibits stronger binding energy due to the primary isotope effect, leading to slowed decomposition and increased thermal stability and coloring suppression properties.

The ethylene content in the EVA (A) is usually from 1 to 99 mol%, preferably from 60 to 98 mol%, and more preferably from 70 to 95 mol%. That is, by setting the ethylene content to not lower than the lower limit value, thermal stability and extrusion moldability of the present resin composition (X) tend to be excellent. By setting the ethylene content to not higher than the upper limit value, coloring suppression properties of the resin composition (X) tend to be excellent.

Furthermore, the content of vinyl acetate in the EVA (A) is usually from 1 to 60 mol%, preferably from 2 to 40 mol%, and more preferably from 3 to 30 mol%. That is, by setting the vinyl acetate content to not lower than the lower limit value, coloring suppression properties of the present resin composition (X) tend to be excellent. By setting the vinyl acetate content to not higher than the upper limit value, the resin composition (X) tends to be excellent in thermal stability and extrusion moldability.

The melt flow rate (MFR) of the EVA (A) (190°C; load: 2160 g) is usually from 0.1 to 100 g/10 min, more preferably from 0.5 to 50 g/10 min, and particularly preferably from 1 to 30 g/10 min. When the MFR is in the range described above, dispersibility in another resin when mixing with such another resin is performed becomes good, and exhibition of the effects of the present disclosure tends to be facilitated.

The MFR can be measured in accordance with JIS K 7120.

Note that the EVA (A) may be a carboxy group-containing modified product produced by subjecting an unsaturated carboxylic acid or an anhydride thereof to chemical bonding by an addition reaction, a graft reaction, or the like in a range that does not impair the effects of the present disclosure. For example, the modification amount is specifically preferably 10 mol% or less. Examples of the unsaturated carboxylic acid or anhydride thereof include ethylenic unsaturated monocarboxylic acids, such as acrylic acid, methacrylic acid, ethacrylic acid, and crotonic acid; ethylenic unsaturated dicarboxylic acids, such as fumaric acid, itaconic acid, citraconic acid, maleic acid, monomethyl maleate, monoethyl maleate, and maleic anhydride; and anhydrides and half esters of these. Among these, maleic anhydride is suitably used.

Furthermore, the EVA (A) may be used alone, or two or more types of the bio EVAs having different ethylene contents, molecular weights, MFRs, densities, modification groups and modification amounts, and the like can be used in combination.

Furthermore, the EVA (A) may use a petroleum EVA derived from petroleum. Furthermore, the EVA (A) may be an EVA produced by substituting some of carbons of a petroleum-derived petroleum EVA with carbon-14 atoms.

The content of the EVA (A) is usually from 1 to 99 mass%, preferably from 10 to 98 mass%, more preferably from 30 to 97 mass%, even more preferably from 50 to 96 mass%, and particularly preferably from 70 to 95 mass%, with respect to the present resin composition (X). By setting the content of the EVA (A) to the range described above, a resin composition (X) having especially excellent thermal stability can be formed.

Saponified EVA (B) Having Ethylene Content of Greater Than 60 mol%

The saponified EVA (B) having an ethylene content of greater than 60 mol% used in the present resin composition (X) is a saponified product of an EVA and can be produced by saponifying a vinyl acetate component of an EVA having an ethylene content of greater than 60 mol%.

The saponified EVA (B) having an ethylene content of greater than 60 mol% (hereinafter, referred to as "high-ethylene saponified EVA (B)") is polymerized by any known polymerization method, for example, solution polymerization, suspension polymerization, or emulsion polymerization, and the saponification of the copolymer can be also performed by any known method. The high-ethylene saponified EVA (B) may be modified as necessary.

The ethylene content of the high-ethylene saponified EVA (B) is only required to be greater than 60 mol%, and is usually 98 mol% or less, more preferably from 70 to 97 mol%, even more preferably from 75 to 95 mol%, and particularly preferably from 80 to 95 mol%. When the ethylene content is in the range described above, the effects of the present disclosure (thermal stability and coloring suppression properties) tend to be more effectively achieved.

The degree of saponification of the high-ethylene saponified EVA (B) is usually 20 mol% or greater, more preferably from 40 to 99.5 mol%, and particularly preferably from 80 to 99 mol%. That is, by setting the aforementioned degree of saponification to the range described above, the effects of the present disclosure (thermal stability and the like) tend to be more effectively achieved.

The melt flow rate (MFR) of the high-ethylene saponified EVA (B) (190°C; load: 2160 g) is usually from 0.5 to 100 g/10 min, preferably from 1 to 50 g/10 min, and particularly preferably from 2 to 30 g/10 min, from the viewpoint of excellent dispersibility and excellent effects of the present disclosure.

The MFR can be measured in accordance with JIS K 7120.

The high-ethylene saponified EVA (B) may be a carboxy group-containing modified product produced by subjecting an unsaturated carboxylic acid or an anhydride thereof to chemical bonding by an addition reaction, a graft reaction, or the like in a range that does not impair the effects of the present disclosure. For example, the modification amount is specifically preferably 10 mol% or less. Examples of the unsaturated carboxylic acid or anhydride thereof include ethylenic unsaturated monocarboxylic acids, such as acrylic acid, methacrylic acid, ethacrylic acid, and crotonic acid; ethylenic unsaturated dicarboxylic acids, such as fumaric acid, itaconic acid, citraconic acid, maleic acid, monomethyl maleate, monoethyl maleate, and maleic anhydride; and anhydrides and half esters of these. Among these, maleic anhydride is suitably used.

The high-ethylene saponified EVA (B) may be used alone, or two or more types of the saponified EVAs having high-ethylene contents, which have different ethylene contents, degrees of saponification, molecular weights, MFRs, densities, modification groups and modification amounts, and the like, can be used in combination.

Furthermore, the high-ethylene saponified EVA (B) used in the present resin composition (X) preferably contains carbon-14.

The biobased content of the high-ethylene saponified EVA (B) used in the present resin composition (X) is usually from 1 to 100%, preferably from 5 to 100%, more preferably from 10 to 100%, even more preferably from 40 to 100%, and particularly preferably from 60 to 90%. By setting the biobased content of the high-ethylene saponified EVA (B) to the aforementioned range, a resin composition (X) having better thermal stability can be produced.

The content of the high-ethylene saponified EVA (B) is usually from 0.001 to 30 mass%, preferably from 0.005 to 25 mass%, more preferably from 0.05 to 10 mass%, and even more preferably from 1.0 to 5 mass%. That is, when the ethylene content is not higher than the upper limit value, coloring suppression properties of the resin composition (X) tend to be excellent. When the ethylene content is not lower than the lower limit value, appearance of a molded body produced by using the resin composition (X) tends to be good.

Furthermore, the total amount that is a sum of the content of the EVA (A) and the content of the high-ethylene saponified EVA (B) [(A) + (B)] with respect to the entire amount of the present resin composition (X) is usually from 70 to 100 mass% with respect to the entire amount of the present resin composition (X).

Note that the present resin composition (X) may contain an additional thermoplastic resin other than the component (B) and the component (A) such as a polyamide resin, a polyester resin, and a polyolefin resin in a range that does not impair the effects of the present disclosure (e.g., less than 30 mass% with respect to the entire amount of the resin composition (X)).

Furthermore, for the present resin composition (X), for example, hydrotalcites (E) and/or a higher fatty acid metal salt (F) are preferably used in combination with the EVA (A) and the high-ethylene saponified EVA (B) because a suppression effect on a foreign substance (a deteriorated resin) generated by phase separation is improved when a molded body is produced by using the present resin composition (X). In particular, hydrotalcites (E) are preferably used from the viewpoint of excellent coloring suppression effect when a regrind layer is produced by using a collected resin material.

Hydrotalcites (E)

Examples of the hydrotalcites (E) include a hydrotalcite solid solution represented by General Formula (1).
[Chem. 1]

$$[(M_1^{2+})_{y1}(M_2^{2+})_{y2}]_{1-x}M_x^{3+}(OH)_2A^{n-}_{x/n} \cdot mH_2O \qquad (1)$$

In the formula, $M_1^{2+}$ is at least one metal selected from Mg, Ca, Sr, or Ba, $M_2^{2+}$ is at least one metal selected from Zn, Cd, Pb, or Sn, $M_x^{3+}$ is a trivalent metal, $A^{n-}$ is an n-valent anion, and x, y1, y2, m are each a positive number satisfying $0 < x \leq 0.5$, $0.5 < y1 < 1$, $y1 + y2 = 1$, and $0 \leq m < 2$.

In General Formula (1), $M_1^{2+}$ is preferably Mg or Ca, and $M_2^{2+}$ is preferably Zn or Cd. Furthermore, examples of the $M_x^{3+}$ include Al, Bi, In, Sb, B, Ga, and Ti. One of these is used alone or two or more thereof may be used in combination, but, in particular, Al is practical. Furthermore, examples of the $A^{n-}$ in General Formula (1) include $CO_3^{2-}$, $OH^-$, $HCO_3^-$, a salicylate ion, a citrate ion, a tartrate ion, $NO_3^-$, $I^-$, $(OOC-COO)^{2-}$, $ClO^{4-}$, $CH_3COO^-$, $CO_3^{2-}$, $(OOCHC=CHCOO)^{2-}$, and $[Fe(CN)_6]^{4-}$. One of these may be used alone or two or more thereof may be used in combination, but, in particular, $CO_3^{2-}$ and $OH^-$ are especially useful.

Specific examples of the hydrotalcite solid solution include

$$[Mg_{0.75}Zn_{0.25}]_{0.67}Al_{0.33}(OH)_2(CO_3)_{0.165} \cdot 0.45H_2O,$$

$$[Mg_{0.79}Zn_{0.21}]_{0.7}Al_{0.3}(OH)_2(CO_3)_{0.15},$$

$$[Mg_{1/7}Ca_{3/7}Zn_{3/7}]_{0.7}Al_{0.3}(OH)_2(OOCHC=CHCOO)_{015} \cdot 0.41 \, H_2O,$$

$$[Mg_{6/7}Cd_{1/7}]_{0.7}Al_{0.3}(OH)_2(CH_3COO)_{0.3} \cdot 0.34H_2O,$$

$$[Mg_{5/7}Pd_{2/7}]_{0.7}Al_{0.30}(OH)_2(CO_3)_{0.15}\text{-}0.52H_2O, \quad [Mg_{0.74}Zn_{0.26}]_{0.68}Al_{0.32}(OH)_2(CO_3)_{0.18},$$

$$[Mg_{0.56}Zn_{0.44}]_{0.68}Al_{0.32}(OH)_2(CO_3)_{0.16} \cdot 0.2H_2O,$$

$$[Mg_{0.81}Zn_{0.19}]_{0.74}Al_{0.26}(OH)_2(CO_3)_{0.13},$$

$$[Mg_{0.75}Zn_{0.25}]_{0.8}Al_{0.20}(OH)_2(CO_3)_{0.10} \cdot 0.16H_2O,$$

$$[Mg_{0.71}Zn_{0.29}]_{0.7}Al_{0.30}(OH)_2(NO_3)_{0.30},$$

$$[Mg_{0.71}Zn_{0.29}]_{0.7}Al_{0.30}(OH)_2(OOCHC=CHCOO)_{0.15}, \text{ and}$$

$$[Mg_{0.14}Ca_{0.57}Zn_{0.28}]_{0.7}Al_{0.30}(OH)_{2.3} \cdot 0.25H_2O. \text{ In particular, examples include}$$

$$[Mg_{0.75}Zn_{0.25}]_{0.67}Al_{0.33}(OH)_2(CO_3)_{0.165} \cdot 0.45H_2O,$$

$$[Mg_{0.79}Zn_{0.21}]_{0.7}Al_{0.3}(OH)_2(CO_3)_{0.15},$$

$$[Mg_{6/7}Cd_{1/7}]_{0.7}Al_{0.3}(OH)_2(CH_3COO)_{0.3} \cdot 0.34H_2O, \text{ and}$$

$$[Mg_{5/7}Pd_{2/7}]_{0.7}Al_{0.30}(OH))_2(CO_3)_{0.15} \cdot 0.52H_2O.$$

In addition, examples of the hydrotalcites (E) include a compound represented by General Formula (2).
[Chem. 2]

$$M_iAl_j(OH)_{2i + 3j - 2z}(E)_z \cdot aH_2O \quad \ldots\ldots \qquad (2)$$

In the formula, M is Mg, Ca, or Zn, E is $CO_3$ or $HPO_4$, i, j, and z are each a positive number, and a is 0 or a positive number.

Specific examples of the compound represented by General Formula (2) include $Mg_{4.5}Al_2(OH)_{13}CO_3 \cdot 3.5H_2O$, $Mg_5Al_2(OH)_{14}CO_3 \cdot 4H_2O$, $Mg_6Al_2(OH)_{16}CO_3 \cdot 4H_2O$, $Mg_8Al_2(OH)_{20}CO_3 \cdot 5H_2O$, $Mg_{10}Al_2(OH)_{22}(CO_3)_2 \cdot 4H_2O$, $Mg_6Al_2(OH)_{16}HPO_4 \cdot 4H_2O$, $Ca_6Al_2(OH)_{16}CO_3 \cdot 4H_2O$, and $Zn_6Al_6(OH)_{16}CO_3 \cdot 4H_2O$. Furthermore, the compound represented by General Formula (2) is not limited to those described above and, for example, equivalent effects can be expected even when a material that cannot be clearly indicated by the chemical formula, such as a case where some of OH moieties in $Mg_2Al(OH)_9 \cdot 3H_2O$ are substituted with $CO_3$ or $HPO_4$, or a material in which water of crystallization has been removed (a = 0) is used. In particular, a compound having Mg as the M and $CO_3$ as the E is suitably used because the use of such a compound provides excellent molding stability and effectively suppresses the deterioration in appearance due to coloring and a phase separation foreign substance (i.e., so-called deteriorated resin) caused by phase separation.

The particle size of the hydrotalcites (E) is, for example, in terms of average particle size, usually 10 μm or less, more preferably 5 μm or less, and particularly preferably 1 μm or less. That is, when the average particle size described above is not higher than the upper limit value, the effects of the present disclosure tend to be more effectively achieved. Note that the average particle size herein is a value measured by the LUZEX method.

Among the hydrotalcites (E), from the viewpoints of molding stability, high suppression effects on a phase separation foreign substance (i.e., deteriorated resin), and high suppression effects on coloring, use of a hydrotalcite solid solution represented by General Formula (1) is particularly preferred.

In a case where the hydrotalcites (E) are used, the content thereof is not particularly limited and is preferably from 0.5 to 30 mass%, more preferably from 1 to 20 mass%, and even more preferably from 2 to 10 mass%, with respect to 100 mass% of the EVA (A). By setting the content to not lower than the lower limit value, molding stability and suppression effects on a foreign substance and coloring tend to be good. By setting the content to not higher than the upper limit value, good appearance of the molded body is achieved, and coloring suppression effects and mechanical properties tend to be excellent.

Higher Fatty Acid Metal Salt (F)

Examples of the higher fatty acid metal salt (F) include metal salts of organic acids having 8 or more carbons (more preferably from 12 to 30 carbons, and particularly preferably from 14 to 22 carbons), such as alkali metal salts of lithium, sodium, potassium, or the like, alkaline-earth metal salts of magnesium, calcium, barium, or the like, and transition metal salts of zinc, copper, cobalt, iron, manganese, or the like. Among these, from the viewpoints of providing excellent molding stability and effectively suppressing a phase separation foreign substance (i.e., deteriorated resin) and coloring, alkaline-earth metal salts and transition metal salts of higher fatty acids having from 14 to 22 carbons are preferred, and magnesium salts, calcium salts, and zinc salts of stearic acid, hydroxystearic acid, oleic acid, or lauric acid are preferred.

In a case where the higher fatty acid metal salt (F) is used, the content thereof is not particularly limited and is preferably from 0.5 to 30 mass%, more preferably from 1 to 20 mass%, and even more preferably from 2 to 10 mass%, with respect to 100 mass% of the EVA (A). By setting the content described above to not lower than the lower limit value, molding stability and suppression effects on a foreign substance and coloring tend to be achieved. By setting the content to not higher than the upper limit value, good appearance of the resulting molded body is achieved, and coloring suppression effects and mechanical properties tend to be excellent.

Note that, also in a case where the hydrotalcites (E) and the higher fatty acid metal salt (F) are used in combination, the contents of the hydrotalcites (E) and the higher fatty acid metal salt (F) are each preferably in the range described above.

Furthermore, for the present resin composition (X), a titanium compound (G) can be used together with the EVA (A) and the high-ethylene saponified EVA (B). The titanium compound (G) is used as a pigment or is contained in a collected and pulverized material; however, when the titanium compound (G) is blended, thermal stability of the resin composition (X) tends to deteriorate. Even in a case where the titanium compound (G) is contained in the present resin composition (X), improvement effects on the thermal stability are achieved, and simultaneously, coloring suppression properties of the present resin composition (X) become even better.

Titanium Compound (G)

Examples of the titanium compound (G) include inorganic titanium compounds and organic titanium compounds. One of these titanium compounds may be used alone or two or more thereof may be used in combination. Among these, an inorganic titanium compound is preferable.

Examples of the inorganic titanium compound include titanium oxides, titanium hydroxides, titanium chlorides, and inorganic salts of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide.

Examples of the titanium chloride include titanium(III) chloride and titanium(IV) chloride.

Examples of the inorganic salt of titanium include titanium phosphate and titanium sulfate.

Among these, titanium oxides are preferable, titanium(IV) oxide is more preferable, rutile-type titanium(IV) oxide is particularly preferable.

Examples of the organic titanium compound include titanium carboxylates such as titanium acetate, titanium butyrate, and titanium stearate.

Note that the titanium compound (G) may be present as a titanium compound in the present resin composition (X) or, in addition, may be present in an ionized state or in a complex state in which the titanium compound interacts with the resin component or another ligand.

In a case where the titanium compound (G) is used, the average particle size thereof is usually from 0.001 to 100 μm, preferably from 0.01 to 50 μm, and more preferably from 0.015 to 20 μm.

In a case where the titanium compound (G) is used, the content of the titanium compound (G) in terms of metal is preferably from 1 to 20 mass%, more preferably from 1 to 15 mass%, even more preferably from 1 to 10 mass%, and particularly preferably from 1 to 8 mass%, with respect to the entire amount of the present resin composition (X).

Note that the content of the titanium compound (G) in terms of metal can be determined by weighing the present resin composition (X) in a platinum crucible, sequentially ashing the present resin composition (X) with a burner and an electric furnace, thermally decomposing the ashed product with nitric acid and hydrofluoric acid, treating the decomposed product with a mixed acid of dilute nitric acid and dilute hydrofluoric acid, and measuring the titanium in a constant volume liquid prepared by measuring the treated material into a constant volume by ICP mass spectrometry using an ICP mass spectrometer (Agilent 8800, available from Agilent Technologies).

Additional Components

According to various purposes, in addition to the EVA (A), the high-ethylene saponified EVA (B), and the hydrotalcites (E), the higher fatty acid metal salt (F), and the titanium compound (G), which can be suitably used, the present resin composition (X) can be blended with a resin other than the EVA (A) and the high-ethylene saponified EVA (B) (e.g., polyolefin resin and other types of resins) and optional additive (hereinafter, these are referred to as "additional components"), within a range that does not significantly impair the effects of the present disclosure. One of the additional components may be used alone, or two or more thereof may be used in any combination and ratio.

Examples of the additives include a lubricant, a plasticizer, a heat stabilizer, a light stabilizer, a UV absorber, an antioxidant, a nucleating agent, a colorant, an antistatic agent, a surfactant, an antimicrobial agent, a desiccant, an oxygen absorber, and an anti-blocking agent.

In particular, from the viewpoint of achieving effects on reducing thermal deterioration of the present resin composition (X), a combined use of an antioxidant among the additives is preferred.

Antioxidant

Examples of the antioxidant include the following substances, and at least one type of these can be selected:

hindered phenol compounds: dibutylhydroxytoluene, 2,5-di-t-butylhydroquinone, 2,6-di-t-butyl-p-cresol, 4,4'-thio-bis-(6-t-butylphenol), 2,2'-methylene-bis(4-methyl-6-t-butylphenol), tetrakis[methylene-3-(3',5'-di-t-butyl-4'-hydroxyphenyl)propionate]methane, N,N'-hexamethylene-bis(3,5-di-t-butyl-4'-hydroxyhydrocinnamide), 1,3,5-trimethyl-2,4,6-tris(3,5-di-t-butyl-4-hydroxybenzyl)benzene, pentaerythritol-tetrakis[3-(3,5-di-t-butyl-4-hydroxyphenyl)propionate], triethylene glycol-bis[3-(3-t-butyl-5-methyl-4-hydroxyphenyl)propionate], 1,6-hexanediol-bis [3-(3,5-di-t-butyl-4-hydroxyphenyl)propionate], 2,4-bis(n-octylthio)-6-(4-hydroxy-3,5-di-t-butylanilino)-1,3,5-triazine, 2,2-thio-diethylene-bis[3-(3,5-di-t-butyl-4-hydroxyphenyl)propionate], octadecyl-3-(3,5-di-t-butyl-4-hydroxyphenyl)propionate, 3,5-di-t-butyl-4-hydroxybenzylphosphonate diethyl ester, bis(ethyl 3,5-di-t-butyl-4-hydroxybenzylphosphonate) calcium, tris(3,5-dit-butyl-4-hydroxybenzyl)isocyanurate, 2,4-bis[(octylthio)methyl]-o-cresol, isooctyl-3-(3,5-di-t-butyl-4-hydroxyphenyl)propionate, n-octadecyl-3-(3,5-di-t-butyl-4-hydroxyphenyl)propionate, 2-t-butyl-6-(3-t-butyl-2-hydroxy-5-methylbenzyl)-4-methylphenyl acrylate, 2-[1-(2-hydroxy-3,5-di-t-pentylphenyl) ethyl]-4,6-di-t-pentylphenyl acrylate, 4,4'-butylidene-bis(3-methyl-6-t-butylphenol), 4,4'-thiobis(3-methyl-6-t-butylphenol), and 3,9-bis{2-[3-(3-t-butyl-4-hydroxy-5-methylphenyl)-propionyloxy]-1,1-dimethylethyl}-2,4,8,10-tetraoxaspiro(5.5)undecane, etc.;

phosphite compounds: triarylphosphites such as triphenylphosphite, tris(p-nonylphenyl)phosphite, and tris(2,4-di-t-butylphenyl)phosphite, monoalkyldiphenylphosphites such as diphenylisooctylphosphite and diphenylisodecylphosphite, dialkylmonophenylphosphites such as phenyldiisooctylphosphite and phenyldiisodecylphosphite, and other alkylarylphosphites, trialkylphosphites such as triisooctylphosphite and tristearylphosphite, and bis(2,4-di-t-butylphenyl)pentaerythritol-diphosphite, etc.;

thioether compounds: pentaerythritol-tetrakis(β-laurylthiopropionate), tetrakis[methylene-3-(dodecylthio)propionate]methane, bis[2-methyl-4-{3-n-alkylthiopropionyloxy}-5-t-butyl-phenyl]sulfides, dilauryl-3,3'-thiodipropionate, dimyristyl-3,3'-thiodipropionate, distearyl-3,3'-thiodipropionate, pentaerythril-tetrakis(3-laurylthiopropionate), ditridecyl-3,3'-thiodipropionate, and 2-mercaptobenzimidazol, etc.;

hindered amine compounds: polycondensates of dimethyl succinate and 1-(2-hydroxyethyl)-4-hydroxy-2,2,6,6-tetramethylpiperidine, poly{[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]}, condensates of N,N'-bis(3-aminopropyl)ethylenediamine and 2,4-bis[N-butyl-N-(1,2,2,6,6-pentamethyl-4-piperidyl)amino]-6-chloro-1,3,5-triazine, bis(2,2,6,6-tetramethyl-4-piperidyl)sebacate, bis(1,2,2,6,6-pentamethyl-4-piperidinyl)sebacate, and bis(1,2,2,6,6-pentamethyl-4-piperidyl)-2-(3,5-di-t-butyl-4-hydroxybenzyl)-2-n-butylmalonate, etc.;

benzotriazole compounds: 2-(5-methyl-2-hydroxyphenyl)benzotriazole, 2-[2-hydroxy-3,5-bis($\alpha,\alpha$-dimethylbenzyl) phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, condensates of methyl-3-[3-t-butyl-5-(2H-benzotriazol-2-yl)-4-hydroxyphenyl]propionate and polyethylene glycol, hydroxyphenylbenzotriazole derivatives, and 2-[2-hydroxy-3-(3,4,5,6-tetrahydrophthalimide-methyl)-5-methylphenyl]benzotriazole, etc.; and

benzophenone compounds: 2-hydroxy-4-methoxybenzophenone, 2-hydroxy-4-octyloxybenzophenone, and 2,2',4,4'-tetrahydroxybenzophenone, etc.. The antioxidant can be used in any form, such as a powdery form, a granular form, a liquid form, a paste form, or an emulsion form.

Among the antioxidants, a hindered phenol antioxidant is preferred. In particular, pentaerythritol-tetrakis-3-(3,5-di-t-butyl-4-hydroxyphenyl)propionate and octadecyl-3-(3,5-di-t-butyl-4-hydroxyphenyl)propionate are preferably used from the viewpoints of achieving excellent effects on reducing thermal deterioration of the present resin composition (X) and not impairing the effects of the present disclosure (discoloration suppression of regrind layer).

In a case where the antioxidant is used, the content thereof is, for example, usually from 0.001 to 10 mass%, preferably from 0.01 to 5 mass%, and particularly preferably from 0.05 to 1 mass%, with respect to 100 mass% of the EVA (A). By setting the content of the antioxidant to not lower than the lower limit value, thermal deterioration of the present resin composition (X) tends to be reduced. By setting the content to not higher than the upper limit value, good appearance of the resulting molded body is achieved, and discoloration prevention effects and mechanical properties tend to be good.

Note that, when the present resin composition (X) contains the "additional components", the total content thereof is usually 30 mass% or less, preferably 20 mass% or less, and more preferably 10 mass% or less, with respect to the amount of the present resin composition (X).

Method for Producing Resin Composition (X)

The present resin composition (X) can be produced by mixing the EVA (A) and the high-ethylene saponified EVA (B), which are the essential components, and the hydrotalcites (E), the higher fatty acid metal salt (F), the titanium compound (G), and additional components, which are suitably used if needed. Examples of the mixing method include known methods such as a dry blending method, a melt mixing method of producing a compound using a single-screw extruder or a twin-screw extruder, a solution mixing method, and an impregnation method, and these methods can be optionally combined.

Resin Composition (X)

The present resin composition (X) produced as described above is less likely to be decomposed in high temperature heating and has excellent thermal stability and excellent coloring suppression properties compared to a known resin composition in which an EVA (A) and/or a saponified EVA (B) does not contain carbon-14.

The melt flow rate (MFR) of the present resin composition (X) (190°C; load: 2160 g) is usually from 0.1 to 50 g/10 min, preferably from 0.5 to 30 g/10 min, and particularly preferably from 2 to 10 g/10 min.

The MFR can be measured in accordance with JIS K 7120.

The moisture content of the present resin composition (X) is usually from 0.01 to 0.5 mass%, preferably from 0.02 to 0.35 mass%, and particularly preferably from 0.05 to 0.3 mass%.

The moisture content of the present resin composition (X) is measured and calculated by the following method.

The mass ($W_1$) of the resin composition before drying is weighed with an electronic balance, after which the resin composition is dried in a hot air dryer at 150°C for 5 hours and then cooled in a desiccator for 30 minutes, and then the mass ($W_2$) after cooling is weighed. The moisture content is calculated from the following equation.

$$\text{Moisture content (mass\%)} = [(W_1 - W_2)/W_1] \times 100$$

The present resin composition (X) is prepared as a resin composition in various forms such as pellets or a powder, and is provided as a material for various molded bodies and multilayer structures. As described above, the present resin composition (X) exhibits excellent thermal stability and coloring suppression properties, and therefore, a molded body produced using the present resin composition (X) or a multilayer structure including a layer produced using the present resin composition (X) is advantageous in that thermal deterioration and quality deterioration in coloring or the like become less even when supplied to recycling.

The present resin composition (X) can be suitably used as a recycling agent (hereinafter, referred to as "present recycling agent") for a collected resin material containing a polyolefin resin (C) and an EVOH (D) described below (e.g., collected material prepared by collecting scraps of a laminate including the polyolefin resin (C) layer and the EVOH (D) layer).

Resin Composition for Recycling agent

In a case where the present resin composition (X) is used as a resin composition for a recycling agent, the content of the present resin composition (X) is preferably 50 mass% or greater, more preferably 70 mass% or greater, even more preferably 90 mass% or greater, and particularly preferably 100 mass%, with respect to the entire amount of the resin composition for a recycling agent.

When the content is greater, exhibition of effects as a recycling agent is facilitated more.

Note that, in the present specification, a recycling agent is an additive blended when a collected resin material containing the polyolefin resin (C) and the EVOH (D) (e.g., collected material prepared by collecting scraps and the like of a laminate including the polyolefin resin layer and the EVOH layer) is mixed or the like, and may be also referred to as a compatibilizer or a recycling aid.

Furthermore, the present recycling agent is produced by pulverizing the present resin composition for a recycling agent into a powdery form.

Molded Body

A molded body according to an example of an embodiment of the present disclosure (hereinafter, referred to as "the present molded body I") is produced by molding the present resin composition (X).

Examples of the shape of the present molded body I include a film, a sheet, a tape, a cup, a tray, a tube, a bottle, a pipe, a filament, an extruded article with an atypical cross-section, and various irregularly-shaped molded articles.

The molding method for producing the present molded body I is not particularly limited, and any molding method can be applied as long as the molding method is applicable to a general resin composition. Examples of the molding method include extrusion molding, blow molding, injection molding, and thermoforming.

Multilayer Structure

A multilayer structure according to an example of an embodiment of the present disclosure (hereinafter, referred to as "the present multilayer structure I") includes a layer containing the present resin composition (X).

The present multilayer structure I can be laminated with another substrate containing a thermoplastic resin other than the present resin composition (X) as a main component to thereby impart further strength or other functions.

Note that a thermoplastic resin being a main component means that the thermoplastic resin is a component that significantly affects the identification of the substrate, and the content of the thermoplastic resin is 50 mass% or greater, preferably 55 mass% or greater, more preferably 60 mass% or greater, and even more preferably 70 mass% or greater, and may be 100 mass%, in the substrate.

Second Aspect

The present resin composition (Y) is any one of the resin composition (Y) containing an EVA (A), a polyolefin resin (C), and an EVOH (D), where the EVA (A) contains carbon-14, or the resin composition (Y) containing an EVA (A), a saponified EVA (B) having an ethylene content of greater than 60 mol%, a polyolefin resin (C), and an EVOH (D), where the EVA (A) and/or the saponified EVA (B) contains carbon-14.

EVA (A)

Examples of the EVA (A) used in the present resin composition (Y) are the same as those described for the aforementioned first aspect.

The content of the EVA (A) used in the present resin composition (Y) is usually from 0.02 to 35 mass%, preferably from 0.5 to 30 mass%, more preferably from 0.8 to 15 mass%, and even more preferably from 1.0 to 10 mass%, with respect to the amount of the present resin composition (Y). By setting the content of the EVA (A) to the range described above, a resin composition (Y) having especially excellent thermal stability can be formed.

Saponified EVA (B) Having Ethylene Content of Greater Than 60 mol%

Examples of the saponified EVA (B) having an ethylene content of greater than 60 mol% used in the present resin composition (Y) are the same as those described for the aforementioned first aspect.

The content of the saponified EVA (B) having an ethylene content of greater than 60 mol% used in the present resin composition (Y) is usually from 0.001 to 30 mass%, preferably from 0.005 to 25 mass%, more preferably from 0.05 to 10 mass%, and even more preferably from 0.1 to 5 mass%, with respect to the amount of the present resin composition (Y). When the ethylene content is not higher than the upper limit value, coloring suppression properties of the resin composition (Y) tend to be excellent. When the ethylene content is not lower than the lower limit value, appearance of a molded body produced by the resin composition (Y) tends to be good.

Polyolefin Resin (C)

Examples of the polyolefin resin (C) (except the EVA (A) and the saponified EVA (B)) used in the present resin composition (Y) include homopolymers and copolymers of olefins, including polyethylenes such as linear low density polyethylenes (LLDPE), low density polyethylenes (LDPE), very low density polyethylenes (VLDPE), medium density polyethylenes (MDPE), and high density polyethylenes (HDPE), polypropylenes (PP), ionomers, ethylene-propylene (block or random) copolymers, ethylene-acrylic acid copolymers, ethylene-acrylate copolymers, ethylene-methacrylic acid copolymers, ethylene-methacrylate copolymers, propylene-$\alpha$-olefin ($\alpha$-olefin having from 4 to 20 carbons) copolymers, ethylene-$\alpha$-olefin ($\alpha$-olefin having from 4 to 20 carbons) copolymers, polybutenes, polypentenes, and polymethylpentenes, and blends of any of these homopolymers and copolymers. One of these is used alone or two or more types are used in combination. Among these, from the viewpoints of economical efficiency and mechanical properties, polyethylene, an ethylene-propylene (block or random) copolymer, polypropylene (PP), and a blended material of these are preferred. From the viewpoint of achieving particularly excellent effects of the present disclosure, polyethylene, polypropylene (PP), and an ethylene-propylene (block or random) copolymer are particularly preferred.

The melt flow rate (MFR) of the polyolefin resin (C) (230°C; load: 2160 g) is usually from 0.1 to 50 g/10 min, and more preferably approximately from 0.5 to 30 g/10 min.

The MFR can be measured in accordance with JIS K 7120.

In the polyolefin resin (C), a known additive, such as a plasticizer, a lubricant, a heat stabilizer, a light stabilizer, a UV absorber, an antioxidant, a nucleating agent, a colorant, an antistatic agent, a surfactant, an antimicrobial agent, a desiccant, an oxygen absorber, or an anti-blocking agent, may be blended or another polyolefin resin may be blended, in a range that does not impair the effects of the present disclosure (e.g., less than 30 mass% with respect to the entire amount of the polyolefin resin (C)).

The content of the polyolefin resin (C) in the present resin composition (Y) is usually from 40 to 99.99 mass%, preferably from 45 to 99.9 mass%, more preferably from 50 to 99 mass%, and even more preferably from 65 to 95 mass%, with respect to the entire amount of the resin composition (Y). When the polyolefin resin (C) is in the range described above, excellent effects of the present disclosure can be more adequately achieved.

EVOH (D)

The EVOH (D) used in the present resin composition (Y) is usually a resin produced by saponification of an ethylene-vinyl ester copolymer, which is a copolymer of ethylene and a vinyl ester monomer, is a water-insoluble thermoplastic resin, and has an ethylene content of usually 60 mol% or less. As the vinyl ester monomer, vinyl acetate is usually used from an economic point of view.

Polymerization of ethylene and the vinyl ester monomer can be carried out by any known polymerization method, for example, solution polymerization, suspension polymerization, or emulsion polymerization, and solution polymerization using methanol as a solvent is usually used. Saponification of the resulting ethylene-vinyl ester copolymer can also be carried out by a known method.

The EVOH (D) thus produced is mainly composed of a structural unit derived from ethylene and a vinyl alcohol structural unit and usually contains a small amount of a vinyl ester structural unit remaining without being saponified.

As the vinyl ester monomer, vinyl acetate is typically used from the viewpoint of good market availability and good impurity treatment efficiency during production. Examples of other vinyl ester monomers include aliphatic vinyl esters, such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters, such as vinyl benzoate. An aliphatic vinyl ester usually having 3 to 20 carbons, preferably having 4 to 10 carbons, and particularly preferably having 4 to 7 carbons can be used. One of these may be used alone or two or more thereof may be used in combination.

The ethylene content in the EVOH (D) can be controlled by the pressure of ethylene when the vinyl ester monomer and ethylene are copolymerized, and is usually 60 mol% or less. The ethylene content is preferably from 20 to 60 mol%, more preferably from 25 to 50 mol%, and particularly preferably from 25 to 35 mol%. When the ethylene content is not lower than the lower limit value, gas barrier properties in high humidity and melt moldability tend to be excellent. When the ethylene content is not higher than the upper limit value, gas barrier properties tend to be excellent.

The ethylene content thereof is usually measured based on, for example, ISO 14663.

The degree of saponification of the vinyl ester component in the EVOH (D) can be controlled by factors such as the amount of a saponification catalyst (usually, an alkaline catalyst such as sodium hydroxide is used), the temperature, and the time when saponifying the ethylene-vinyl ester copolymer, and the degree of saponification is usually from 90 to 100 mol%, preferably from 95 to 100 mol%, and particularly preferably from 99 to 100 mol%. When the degree of saponification is in the range described above, gas barrier properties, thermal stability, moisture resistance, and the like tend to be excellent.

The degree of saponification of the EVOH is usually measured based on JIS K 6726 (with a proviso that the EVOH is used in the form of a solution with the EVOH uniformly dissolved in a water-methanol solvent).

The melt flow rate (MFR) of the EVOH (D) (190°C; load: 2160 g) is usually from 0.5 to 100 g/10 min, preferably from 1 to 50 g/10 min, and particularly preferably from 3 to 35 g/10 min. When the MFR is not higher than the upper limit value, film formability tends to be stable. When the MFR is not lower than the lower limit value, viscosity tends to be stable, and melt extrusion tends to be better.

The MFR is an index of the degree of polymerization of the EVOH, and can be adjusted by the amount of a polymerization initiator or the amount of a solvent when ethylene and a vinyl ester monomer are copolymerized. Furthermore, the MFR can be measured in accordance with JIS K 7120.

Moreover, the EVOH (D) may further contain a structural unit derived from a comonomer described below in a range that does not impair the effects of the present disclosure (e.g., 10 mol% or less with respect to the entire amount of the EVOH).

Examples of the comonomer include olefins such as propylene, 1-butene, and isobutene; hydroxy group-containing α-olefins such as 3-buten-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group with 1 to 18 carbons; acrylamides such as acrylamide, N-alkylacrylamides having an alkyl group having from 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group having from 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers, such as alkyl vinyl ethers having an alkyl group having from 1 to 18 carbons, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. One of these may be used alone or two or more thereof may be used in combination.

In particular, an EVOH having a primary hydroxy group in a side chain is preferable in that secondary moldability is improved while gas barrier properties are maintained, and among these, an EVOH produced by copolymerizing hydroxy group-containing α-olefins is preferred, and an EVOH having a 1,2-diol structure in a side chain is particularly preferred. In particular, in a case of using the EVOH having a primary hydroxy group in a side chain, the content of the structural unit derived from a monomer having the primary hydroxy group is usually preferably from 0.1 to 20 mol%, more preferably from 0.5 to 15 mol%, and particularly preferably from 1 to 10 mol%, of the EVOH.

Further, the EVOH (D) may be an EVOH that has been subjected to a "post-modification" treatment such as urethanization, acetalization, cyanoethylation, or oxyalkylenation.

Moreover, the EVOH (D) may be a mixture of two or more types of EVOH, such as EVOH having different degrees of saponification, EVOH having different degrees of polymerization, and EVOH having different copolymerization components.

The content of the EVOH (D) in the present resin composition (Y) is usually from 0.1 to 30 mass%, preferably from 0.3 to 25 mass%, more preferably from 0.4 to 23 mass%, even more preferably from 0.5 to 15 mass%, and particularly preferably from 1.0 to 10 mass%, with respect to the entire amount of the resin composition (Y). When the EVOH (D) is in the range described above, excellent effects of the present disclosure can be adequately exhibited.

Note that, for the present resin composition (Y), for example, in addition to the components described above, the hydrotalcites (E) and/or the higher fatty acid metal salt (F) is preferably used in combination because a suppression effect on a foreign substance (deteriorated resin) generated by phase separation is improved when a molded body is produced by using the present resin composition (Y). In particular, hydrotalcites (E) are preferably used from the viewpoint of excellent coloring suppression effect when a regrind layer is produced by using a collected resin material.

Hydrotalcites (E)

Examples of the hydrotalcites (E) used in the present resin composition (Y) are the same as the hydrotalcites (E) described for the aforementioned first aspect.

In a case where the hydrotalcites (E) are contained in the present resin composition (Y), the content thereof is not particularly limited and is usually from 0.001 to 30 mass%, preferably from 0.005 to 25 mass%, more preferably from 0.05 to 10 mass%, and even more preferably from 0.1 to 5 mass%, with respect to the amount of the present resin composition (Y). By setting the content to not lower than the lower limit value, molding stability and suppression effects on a foreign substance and coloring tend to be good. By setting the content to not higher than the upper limit value, good appearance of the molded body is achieved, and coloring suppression effects and mechanical properties tend to be excellent.

Higher Fatty Acid Metal Salt (F)

Examples of the higher fatty acid metal salt (F) used in the present resin composition (Y) are the same as the higher fatty acid metal salt (F) described for the aforementioned first aspect.

In a case where the higher fatty acid metal salt (F) is contained in the present resin composition (Y), the content thereof is not particularly limited and is usually from 0.001 to 30 mass%, preferably from 0.005 to 25 mass%, more preferably from 0.05 to 10 mass%, and even more preferably from 0.1 to 5 mass%, with respect to the amount of the present resin composition (Y). By setting the content to not lower than the lower limit value, molding stability and suppression effects on a foreign substance and coloring tend to be achieved. By setting the content to not higher than the upper limit value, good appearance of the resulting molded body is achieved, and coloring suppression effects and mechanical properties tend to be excellent.

Note that, also in a case where the hydrotalcites (E) and the higher fatty acid metal salt (F) are used in combination, the contents of the hydrotalcites (E) and the higher fatty acid metal salt (F) are each preferably in the range described above.

Furthermore, for the present resin composition (Y), a titanium compound (G) can be used together with the EVA (A), the high-ethylene saponified EVA (B), the polyolefin resin (C), and the EVOH (D).

Titanium Compound (G)

Examples of the titanium compound (G) used in the present resin composition (Y) are the same as the titanium compound (G) described for the aforementioned first aspect.

In a case where the titanium compound (G) is used, the content of the titanium compound (G) in terms of metal is preferably from 0.0001 to 20 mass%, more preferably from 0.001 to 15 mass%, even more preferably from 0.005 to 10 mass%, and particularly preferably from 0.01 to 8 mass%, with respect to the entire amount of the present resin composition (Y).

Additional Components

According to various purposes, the present resin composition (Y) can be blended with, for example, a resin that is another type from the resin of the essential components described above and optional additives besides the components described above (hereinafter, these are referred to as "additional components") within a range that does not significantly impair the effects of the present disclosure. One of the additional components may be used alone, or two or more thereof may be used in any combination and ratio.

Examples of the additives include a lubricant, a plasticizer, a heat stabilizer, a light stabilizer, a UV absorber, an antioxidant, a nucleating agent, a colorant, an antistatic agent, a surfactant, an antimicrobial agent, a desiccant, an oxygen absorber, and an anti-blocking agent.

In particular, from the viewpoint of achieving effects on reducing thermal deterioration of the present resin composition (Y), a combined use of an antioxidant among the additives is preferred.

Antioxidant

Examples of the antioxidant used in the present resin composition (Y) are the same as the antioxidant described for the aforementioned first aspect.

In a case where the antioxidant is contained in the present resin composition (Y), for example, the content thereof is usually from 0.001 to 30 mass%, preferably from 0.005 to 25 mass%, more preferably from 0.05 to 10 mass%, and even more preferably from 0.1 to 5 mass%, with respect to the amount of the present resin composition (Y). By setting the content of the antioxidant to not lower than the lower limit value, thermal deterioration of the present resin composition (Y) tends to be reduced. By setting the content to not higher than the upper limit value, good appearance of the resulting molded body is achieved, and discoloration prevention effects and mechanical properties tend to be excellent.

Note that, when the present resin composition (Y) contains "additional components" described above, the total content thereof is usually 30 mass% or less, preferably 20 mass% or less, and more preferably 10 mass% or less, with respect to the amount of the present resin composition (Y).

Method for Producing Resin Composition (Y)

The present resin composition (Y) can be produced by mixing the EVA (A), the high-ethylene saponified EVA (B), the polyolefin resin (C), and the EVOH (D), which are the essential components, and the hydrotalcites (E), the higher fatty acid metal salt (F), the titanium compound (G), and additional components, which are suitably used if needed.

Furthermore, the present resin composition (Y) can be produced by mixing the resin composition (X) with the polyolefin resin (C) and the EVOH (D). Note that, in a case where the resin composition (X) contains the hydrotalcites (E), the higher fatty acid metal salt (F), and the titanium compound (G), a resin composition (Y) having excellent thermal stability and coloring suppression properties can be produced without adding the hydrotalcites (E), the higher fatty acid metal salt (F), or the titanium compound (G).

Examples of the mixing method include known methods such as a dry blending method, a melt mixing method of producing a compound using a single-screw extruder or a twin-screw extruder, a solution mixing method, and an impregnation method, and these methods can be optionally combined.

Note that the polyolefin resin (C) and the EVOH (D) can utilize a recycled resin produced by pulverizing a collected material prepared by collecting scraps and the like of a laminate including the polyolefin resin layer and the EVOH layer.

Resin Composition (Y)

The present resin composition (Y) produced as described above is less likely to be decomposed in high temperature heating and has excellent thermal stability and excellent coloring suppression properties compared to a known resin composition in which an EVA (A) and/or a high-ethylene saponified EVA (B) does not contain carbon-14.

The melt flow rate (MFR) of the present resin composition (Y) (230°C; load: 2160 g) is usually from 0.1 to 50 g/10 min, preferably from 0.5 to 30 g/10 min, and particularly preferably from 2 to 10 g/10 min.

The MFR can be measured in accordance with JIS K 7120.

The moisture content of the present resin composition (Y) is usually from 0.01 to 0.5 mass%, preferably from 0.02 to 0.35 mass%, and particularly preferably from 0.05 to 0.3 mass%.

The moisture content of the present resin composition (Y) is measured and calculated by the following method.

The mass ($W_1$) of the resin composition before drying is weighed with an electronic balance, after which the resin composition is dried in a hot air dryer at 150°C for 5 hours and then cooled in a desiccator for 30 minutes, and then the mass ($W_2$) after cooling is weighed. The moisture content is calculated from the following equation.

$$\text{Moisture content (mass\%)} = [(W_1 - W_2)/W_1] \times 100$$

The present resin composition (Y) is prepared as a resin composition in various forms such as pellets or a powder, and is provided as a material for various molded bodies and multilayer structures. As described above, the present resin composition (Y) exhibits excellent thermal stability and coloring suppression properties, and therefore, a molded body produced using the present resin composition (Y) or a multilayer structure including a layer produced using the present resin composition (Y) is advantageous in that thermal deterioration and quality deterioration in coloring or the like become less even when supplied to recycling.

Furthermore, as described above, the polyolefin resin (C) and the EVOH (D) may be a material derived from a collected material prepared by collecting scraps or the like of a laminate including the polyolefin resin (C) layer, the EVOH (D) layer, and the like. A case where the present resin composition (Y) is such a recycled resin composition is preferred because a molded body and a multilayer structure having excellent quality can be provided since, as described above, thermal deterioration and quality deterioration in coloring or the like become less.

Molded Body

A molded body according to an example of an embodiment of the present disclosure (hereinafter, referred to as "the present molded body II") is produced by molding the present resin composition (Y).

Examples of the shape of the present molded body II include a film, a sheet, a tape, a cup, a tray, a tube, a bottle, a pipe, a filament, an extruded article with an atypical cross-section, and various irregularly-shaped molded articles.

The molding method for producing the present molded body II is not particularly limited, and any molding method can be applied as long as the molding method is applicable to a general resin composition. Examples of the molding method include extrusion molding, blow molding, injection molding, and thermoforming.

Multilayer Structure

A multilayer structure according to an example of an embodiment of the present disclosure (hereinafter, referred to as "the present multilayer structure II") includes at least one layer containing the present resin composition (Y).

The present multilayer structure II can be laminated with another substrate containing a thermoplastic resin of the present resin composition (Y) as a main component to thereby impart further strength or other functions.

Note that a thermoplastic resin being a main component means that the thermoplastic resin is a component that significantly affects the identification of the substrate, and the content of the thermoplastic resin is 50 mass% or greater, preferably 55 mass% or greater, more preferably 60 mass% or greater, and even more preferably 70 mass% or greater, and may be 100 mass%, in the substrate.

Furthermore, in the present multilayer structure II, the layer containing the present resin composition (Y) is preferably a layer (regrind layer) formed by using a present resin composition (Y) containing a polyolefin resin (C) and an EVOH (D) derived from collected materials prepared by collecting scraps and the like of a laminate including the polyolefin resin (C) layer and the EVOH (D) layer (= recycled resin composition). Such a multilayer structure including a regrind layer will be described below.

Regrind Layer

A collected material of a laminate including a polyolefin resin (C) layer and an EVOH (D) layer for producing a regrind layer according to an embodiment of the present disclosure is a material collected as scraps of a product, an unnecessary part such as an edge, a defective piece produced during production, a waste remained after the molded body is used in various purposes, or the like, and the regrind layer can be produced by reusing the collected material, preparing the present resin composition (Y), and using this present resin composition (Y).

Note that, as the collected material used for reuse, generally, scraps and the like related to one molded body are used; however, scraps and the like related to two or more molded bodies may be used as the collected material.

To produce the regrind layer, for example, the collected material (composition containing the polyolefin resin (C) and the EVOH (D)) is blended with a suitable combination of the EVA (A) and the high-ethylene saponified EVA (B) that are additional components of the present resin composition (Y) and other optional components and then, as necessary, a polyolefin resin (C) and an EVOH (D) are newly added. Alternatively, the collected material (composition containing the polyolefin resin (C) and the EVOH (D)) is added to the resin composition (X). These are uniformly mixed, and thus the present resin composition (Y), which is a recycled resin composition, is produced. Then, melt molding is performed by using the present resin composition (Y), and thus the present multilayer structure having the regrind layer can be produced.

First, the collected material of the laminate is preferably pulverized to supply the collected material to melt molding by using an extruder or the like.

Pulverization of the collected material can be performed by using a known crusher. Regarding the shape and particle size of this pulverized material, for example, in terms of a value measured in accordance with testing methods of "5.3 Apparent Density" of JIS K 6891, from 0.25 to 0.85 g/mL is usually preferred, from 0.3 to 0.7 g/mL is more preferred, and from 0.35 to 0.6 g/mL is particularly preferred. When this apparent density is not lower than the lower limit value, dispersion of the EVOH in the regrind layer tends to be good, and melt moldability and mechanical properties of the regrind layer in the resulting molded article tend to be excellent. When the density is not higher than the upper limit value, occurrence of supplying failure by an extruder tends to be suppressed, and melt moldability of the regrind layer of the resulting molded article tends to be excellent.

This apparent density can be controlled by freely adjusting the shape of a grinding blade of a crusher, rotation speed of a grinding blade, treatment speed of pulverization, size of opening of a used mesh, or the like.

Note that the content of the EVOH in the collected material is usually from 0.1 to 30 wt.% with respect to the total weight of the collected material and, particularly, to exhibit the effects of the present resin composition (Y), the content is more preferably set to 0.3 to 25 wt.%, and particularly preferably set to 0.5 to 20 wt %. In the present disclosure, although the improvement effects are exhibited with a collected material having any content, the aforementioned range particularly allows exhibition of the improvement effects.

The content of the EVOH in the collected material depends on the thickness ratio of the EVOH layer in the laminate. In a case where the content of the EVOH is too small, as necessary, a proper amount of an unused EVOH of the same or a different type may be mixed to adjust the content thereof. On the other hand, in a case where the content of the EVOH is too large, a proper amount of an unused polyolefin resin of the same or a different type is practically preferably mixed to adjust the content thereof.

Next, to the pulverized collected material the EVA (A), the high-ethylene saponified EVA (B), and the like, which are the rest of the components of the present resin composition (Y), are blended. Alternatively, the resin composition (X) is blended.

Examples of the blending method include use of a known mixing device such as a rocking mixer, a ribbon blender, a super mixer, a line mixer, or the like.

In this manner, the present resin composition (Y), which is the recycled resin composition containing the collected material, can be produced.

The present multilayer structure including at least one layer of regrind layer can be produced by using the present resin composition (Y). The present multilayer structure including the regrind layer is, in general, preferably a multilayer structure further including, besides the regrind layer, a polyolefin resin layer and an EVOH layer and, as necessary, an adhesive resin layer. Note that the polyolefin resin layer, the EVOH layer, and the adhesive resin layer do not contain the EVA (A).

Examples of the layer structure of the multilayer structure including the regrind layer include a polyolefin resin layer/regrind layer/adhesive resin layer/EVOH layer, a polyolefin resin layer/regrind layer/adhesive resin layer/EVOH layer/adhesive resin layer/polyolefin resin layer, a polyolefin resin layer/regrind layer/adhesive resin layer/EVOH layer/-adhesive resin layer/regrind layer/polyolefin resin layer, a regrind layer/EVOH layer, a regrind layer/adhesive resin layer/EVOH layer, a regrind layer/adhesive resin layer/EVOH layer/adhesive resin layer/EVOH layer, a regrind layer/-adhesive resin layer/EVOH layer/adhesive resin layer/polyolefin resin layer, a regrind layer/adhesive resin layer/EVOH layer/adhesive resin layer/regrind layer/polyolefin resin layer, and a polyolefin resin layer/adhesive resin layer/EVOH layer/regrind layer/EVOH layer/adhesive resin layer/polyolefin resin layer.

The thickness of each layer of the multilayer structure including the regrind layer cannot be generalized because of a layer structure, type of polyolefin resin, use and container form, required physical properties, and the like; however, the thickness of the regrind layer is usually from 5 to 5000 $\mu$m, and more preferably from 30 to 1000 $\mu$m. The thickness of the EVOH layer is usually from 5 to 500 $\mu$m, and more preferably from 10 to 200 $\mu$m. The thickness of the polyolefin resin layer is usually from 5 to 5000 $\mu$m, and more preferably from 30 to 1000 $\mu$m. At this time, in a case where the adhesive resin layer is contained, the thickness of the adhesive resin layer is usually from 5 to 400 $\mu$m, and more preferably from 10 to 150 $\mu$m.

The thickness ratio of the regrind layer/polyolefin resin layer is usually preferably from 1/5 to 10/1, and more preferably from 1/2 to 5/1. The thickness ratio of the regrind layer/EVOH layer is usually preferably from 1/1 to 100/1, and more preferably from 5/1 to 20/1.

The multilayer structure including the regrind layer can be formed by, for example, the same type of method as the method for forming the laminate that becomes the collected material. Specifically, production can be performed by a method described below by using a polyolefin resin used for a polyolefin resin layer of a laminate that becomes the collected material, EVOH used for an EVOH layer, and an adhesive resin used for an adhesive resin layer.

Examples of the method for producing the multilayer structure include a method of melt-extrusion-laminating the present resin composition (Y) onto an EVOH film or sheet or the like, a method of melt-extrusion-laminating the present resin composition (Y) onto a substrate made of a polyolefin layer, a method of co-extruding the EVOH or the polyolefin resin and the present resin composition (Y), and a method of dry-laminating a film or sheet or the like of EVOH or polyolefin resin with a film or sheet or the like of the present resin composition (Y) by using an adhesive such as an organic titanium compound, an isocyanate compound, a polyester compound, or a polyurethane compound. The melt molding temperature during melt extrusion is usually in a range of from 150 to 300°C.

The multilayer structure including the regrind layer is used as is for a material in various shapes but can be subjected to a hot stretching treatment to further improve the physical properties of this laminate and to mold into any target container shape.

Note that the hot stretching treatment means operation of molding a film, a sheet, or a parison-like multilayer structure that has been heated thermally uniformly into a form such as a cup, a tray, a tube, or a bottle, by a chuck, a plug, vacuum force, compressed air force, or blowing.

Examples of the stretching method in the hot stretching treatment include a roll stretching method, a tenter stretching method, a tubular stretching method, a stretch blowing method, vacuum molding, pressure molding, and vacuum-pressure molding. In the case of biaxial stretching, any of a simultaneous biaxial stretching method or a successive biaxial stretching method can be employed. The stretching temperature is usually from 60 to 170°C, and more preferably approximately from 80 to 160°C. Any of uniaxial stretching or biaxial stretching may be used, and a stretching ratio of as high as possible can provide a stretched molded body that has good physical properties, that does not cause pinholes, cracks, stretching unevenness, uneven thickness, delamination, or the like during stretching, and that has excellent gas barrier properties.

Note that, in the present multilayer structure, the collected material used in the regrind layer may also include a regrind layer in the collected material, and a laminate including at least one layer of regrind layer containing such a collected material can be molded by the same type of method by using the resin type that is the same as the collected material as a raw material. That is, a laminate (recycled article) including at least one layer of regrind layer is produced by using a resin composition prepared from a collected material, then a collected material of the molded body may be used for a regrind layer of a similar laminate again (re-recycled article).

Furthermore, as other embodiments of the present multilayer structure, the following is also possible: [1] a collected material of a laminate including a plurality of different types of polyolefin resin layers or a plurality of different types of EVOH layers and/or a collected material of a plurality of different types of laminates is used in an identical regrind layer, and [2] a collected material is used in a regrind layer of a laminate including a polyolefin resin and EVOH that are different from the polyolefin resin and the EVOH contained in this collected material.

Furthermore, in each layer of the present multilayer structure, to improve molding processability, physical properties, and the like, an antioxidant, a heat stabilizer, a light stabilizer, a lubricant, an antistatic agent, a nucleating agent, a plasticizer, a colorant, a UV absorber, a surfactant, an antimicrobial agent, a desiccant, an oxygen absorber, or an anti-blocking agent, a slip agent, an inorganic/organic filler, and the like can be added in a range that does not impair the effects of the present disclosure.

As necessary, the present multilayer structure may be subjected to heat treatment, cooling treatment, rolling treatment, printing treatment, dry lamination treatment, solution or melt coating treatment, bag-making, deep drawing, box processing, tube processing, splitting, and the like.

Regardless of recycled article or re-recycled article, the present multilayer structure is useful as various containers for general foods, seasonings such as mayonnaise and dressing, fermented foods such as fermented soybean paste, oil and fat foods such as salad oil, soup, beverages, cosmetics, pharmaceutical products, detergents, perfumes, industrial reagents, agrochemicals, fuels, and the like. Particularly, the present multilayer structure is useful for containers for semisolid foods and seasonings such as mayonnaise, ketchup, sauce, fermented soybean paste, Japanese wasabi, mustard, and dip for grilled meat, bottles and tubular containers for liquid beverages and seasonings such as salad oil, Japanese cooking sake, Japanese refined sake, beer, wine, juice, black tea, sports drinks, mineral water and milk, cup-like containers for semisolid foods, and seasonings such as fruit, jelly, pudding, yogurt, mayonnaise, fermented soybean paste, processed rice, processed foods, and soup, and tray-like containers for raw meat, processed meat products (ham, bacon, sausage, and the like), cooked rice, and pet foods.

Examples

Hereinafter, the present disclosure will be more specifically described with reference to examples below, but the present disclosure is not limited to the examples below as long as a departure from the gist of the present disclosure does not occur. Unless otherwise specified, "parts" and "%" below are based on mass.

Prior to the examples, the following components were prepared.

EVA (A)

- Carbon-14-containing EVA (A1): EVA derived from a biomass resource (SVT2145R, available from Braskem S.A.); ethylene content: 95 mol%; vinyl acetate content: 14 mass%; MFR (190°C; load: 2160 g): 2.1 g/10 min; biobased content: 88%
- Petroleum-derived EVA (A2): EVA derived from a petroleum raw material (Nipoflex ( Ultrathene) 630, available from Tosoh Corporation); ethylene content: 95 mol%; vinyl acetate content: 15 mass%; MFR (190°C; load: 2160 g): 1.5 g/10 min; density: 0.936 g/cm$^3$
  Saponified EVA (B)
- Saponified EVA (B1): saponified EVA derived from a petroleum raw material (Melthene H0051K, available from Tosoh Corporation); ethylene content: 89 mol%; degree of saponification: 99 mol%; MFR (190°C; load: 2160 g): 6.5 g/10 min
  Polyolefin Resin (C)
- Polyolefin resin (C1): Polypropylene (NOVATEC (trade name) EA9; available from Japan Polypropylene Corporation); MFR (230°C; load: 2160 g): 0.5 g/10 min
  Adhesive Resin
- Maleic anhydride graft-modified ethylene-propylene random copolymer; MFR (230°C; load: 2160 g): 3.2 g/10 min
  EVOH (D)
- EVOH (D1): EVOH (ethylene content: 32 mol%; degree of saponification: 99.9 mol%); MFR (190°C; load: 2160 g): 3.8 g/10 min Hydrotalcites (E)
- Hydrotalcites (E1): Hydrotalcite solid solution (ZHT-4A, available from Kyowa Chemical Industry Co., Ltd.)
  Higher Fatty Acid Metal Salt (F)

- Higher fatty acid metal salt (F1): Calcium stearate (Nissan Calcium Stearate S, available from NOF Corporation)
  Titanium Compound (G)
- Titanium compound (G1): Titanium oxide (available from Wako Pure Chemical Industries, Ltd.)
  Antioxidant
- Pentaerythritol-tetrakis(3-(3,5-di-t-butyl-4-hydroxyphenyl)propionate) (Irganox 1010, available from Ciba Specialty Chemicals)

First Aspect

Example 1-1

85 parts of carbon-14-containing EVA (A1), 5 parts of saponified EVA (B1), 5 parts of hydrotalcites (E1), 5 parts of higher fatty acid metal salt (F1), and 0.05 parts of antioxidant were mixed together all at once by dry blending. The mixture was then fed to a twin-screw kneader at a rate of 8 kg/hour using a mass-type feeder, after which the mixture was strand-cut with a drum pelletizer, and thereby a resin composition (X) was prepared in the form of pellets. The kneading conditions were as follows.

Kneading Conditions

- Twin-screw extruder: diameter = 20 mm, L/D = 48 (available from Toshiba Machine Co., Ltd.)
- Set temperature of extruder (°C): C1/C2/C3/C4/C5/C6/H = 120/150/160/160/170/170/170
- Screw rotational speed: 250 rpm
- Take-up speed: 12 m/min

Examples 1-2 to 1-4 and Comparative Examples 1-1 and 1-2

Resin compositions (X) of Examples 1-2 to 1-4 and Comparative Examples 1-1 and 1-2 were prepared in the same manner as in Example 1 with the exception that the type and blending amount of each component were changed as described in Table 1 below.

The resulting resin compositions (X) of Examples 1-1 to 1-4 and Comparative Examples 1-1 and 1-2 were subjected to the following thermal stability evaluation and coloring suppression property evaluation. The results for these are presented in Table 1 below.

Thermal Stability Evaluation (10% Loss Temperature)

The temperature (10% loss temperature) at which the mass of the resin composition (X) decreased to 90% compared to the mass of the resin composition (X) before start of the measurement was measured by using 5 mg of each of the produced pellet-shaped resin compositions (X) and using a thermogravimetric analyzer (Pyris 1 TGA, available from PerkinElmer Inc.) in a nitrogen atmosphere, at a gas flow rate of 20 mL/min, and in a temperature range of from 30 to 550°C. A higher value determined means that the decomposition of the resin composition (X) is slower, and that the resin composition (X) has excellent thermal stability.

The evaluation was performed based on the following criteria.

A (excellent): The 10% loss temperature was 370.0°C or higher
B (very good): The 10% loss temperature was 367.5°C or higher and lower than 370.0°C
C (good): The 10% loss temperature was 362.5°C or higher and lower than 367.5°C
D (poor): The 10% loss temperature was lower than 362.5°C

Coloring Suppression Property Evaluation (Ratio of YI Value)

The pellet-shaped resin composition (X) was pulverized by a crusher (SKR16-240, available from Sometani Sangyo Company Limited) at 650 rpm, and thus 1 to 5 mm-square pulverized materials were produced.

The resulting pulverized materials were filled in a cylinder having an internal diameter of 32 mm and a height of 30 mm and the excess was stricken off, and this was fed to yellow index (YI value) measurement before heating by using a spectrocolorimeter (available from Nippon Denshoku Industries Co., Ltd.).

Furthermore, the pulverized materials were subjected to a heat treatment at 60°C for 3 days in an oven in an air atmosphere, and then to measurement of the YI value in the same manner after the heating. The ratio of the YI value after the heating to the YI value before the heating was calculated. A larger value means that the resin composition (X) is colored yellow more after the heating.

The evaluation was performed based on the following criteria.

A (excellent): The ratio of the YI values was 1.0 or less
B (very good): The ratio of the YI values was greater than 1.0 and 3.5 or less
C (good): The ratio of the YI values was greater than 3.5 and 5.0 or less
D (poor): The ratio of the YI values was greater than 5.0

[Table 1]

| | Resin composition (X) | | | | | | | Molded body evaluation | | | |
|---|---|---|---|---|---|---|---|---|---|---|---|
| | Type of EVA (A) | Content of EVA (A)(part) | Content of saponified EVA (B1) (part) | Content of hydrotalcite (E1) (part) | Content of higher fatty acid metal salt (F1) (part) | Antioxidant (part) | Content of titanium compound (G1) (part) | 10% loss temperature | Evaluation | Ratio of YI value (after heating/before heating) | Evaluation |
| Example 1-1 | Carbon-14-containing EVA (A1) | 85 | 5 | 5 | 5 | 0.05 | 5 | 368.8 | B | 1.0 | A |
| Example 1-2 | Carbon-14-containing EVA (A1) | 85 | 5 | 5 | 5 | 0.05 | 0 | 373.6 | A | 3.0 | B |
| Example 1-3 | Carbon-14-containing EVA (A1) | 90 | 0 | 5 | 5 | 0.05 | 5 | 366.8 | C | 1.1 | B |
| Example 1-4 | Carbon-14-containing EVA (A1) | 90 | 0 | 5 | 5 | 0.05 | 0 | 368.5 | B | 1.2 | B |
| Comparative Example 1-1 | Petroleum-derived EVA (A2) | 85 | 5 | 5 | 5 | 0.05 | 0 | 362.1 | D | 5.1 | D |
| Comparative Example 1-2 | Petroleum-derived EVA (A2) | 85 | 5 | 5 | 5 | 0.05 | 5 | 360.5 | D | 0.8 | A |

The results in Table 1 show that the thermal stabilities of the resin compositions (X) of Examples 1-1 to 1-4 that used the carbon-14-containing EVA (A1) as the EVA were improved compared to those of Comparative Examples 1-1 and 1-2 that used the petroleum-derived EVA (A2). In addition, the comparison between Example 1-2 and Comparative Example 1-1 shows that the coloring suppression properties were also improved in cases where the carbon-14-containing EVA (A1) was used. This is probably because the carbon-14 ($^{14}$C)-containing EVA has a stronger binding energy due to the primary isotope effect, leading to slowed decomposition and increased thermal stability, as well as synergistic effect of the hydrotalcites (E1) and the higher fatty acid metal salt (F1).

It is clear that the effect of excelling in thermal stability and coloring suppression properties of the aforementioned Examples 1-1 to 1-4 was similarly achieved even when the blending ratio or type of each component was changed.

Note that, from Example 1-1 and Comparative Example 1-2, it is clear that, when the resin composition (X) contained the titanium compound (G1), by using the carbon-14-containing EVA (A1) in place of the petroleum-derived EVA (A2), thermal stability and yellowing suppression properties improved. In addition, even among Examples 1-1 to 1-4, superior coloring suppression properties were achieved.

Second Aspect

Example 2-1

A collected and pulverized material produced by pulverizing a collected material of a laminate in which a layer made of a polyolefin resin (C1) and a layer made of an EVOH (D1) were laminated with an adhesive resin layer sandwiched therebetween, a carbon-14-containing EVA (A1), a saponified EVA (B1), hydrotalcites (E1), and higher fatty acid metal salt (F1) were mixed together all at once by dry blending in a proportion that makes these components have composition listed in Table 2. The mixture was then fed to a twin-screw kneader at a rate of 8 kg/hour using a mass-type feeder, after which the mixture was strand-cut with a drum pelletizer, and thereby a resin composition (Y) was prepared in the form of pellets. The kneading conditions were as follows.

Kneading Conditions

- Twin-screw extruder: diameter = 20 mm, L/D = 48 (available from Toshiba Machine Co., Ltd.)
- Set temperature of extruder (°C): C1/C2/C3/C4/C5/C6/H = 120/150/160/160/170/170/170
- Screw rotational speed: 250 rpm
- Take-up speed: 12 m/min

Examples 2-2 to 2-5 and Comparative Example 2-1

Resin compositions (Y) of Examples 2-2 to 2-5 and Comparative Example 2-1 were prepared in the same manner as in Example 2-1 with the exception that the type and blending amount of each component were changed as described in Table 2 below.

The resulting resin compositions (Y) of Examples 2-1 to 2-5 and Comparative Example 2-1 were subjected to the following thermal stability evaluation and coloring suppression property evaluation. The results for these are presented in Table 2 below.

Thermal Stability Evaluation (5% Loss Temperature)

The temperature (5% loss temperature) at which the mass of the resin composition (Y) decreased to 95% compared to the mass of the resin composition (Y) before start of the measurement was measured by using 5 mg of each of the produced pellet-shaped resin compositions (Y) and using a thermogravimetric analyzer (Pyris 1 TGA, available from PerkinElmer Inc.) in a nitrogen atmosphere, at a gas flow rate of 20 mL/min, and in a temperature range of from 30 to 550°C. A higher value determined means that the decomposition of the resin composition (Y) is slower, and that the resin composition (Y) has excellent thermal stability.

The evaluation was performed based on the following criteria.

A (excellent): The 5% loss temperature was 380.0°C or higher
B (very good): The 5% loss temperature was 375.0°C or higher and lower than 380.0°C
C (good): The 5% loss temperature was 372.5°C or higher and lower than 375.0°C
D (poor): The 5% loss temperature was lower than 372.5°C

Coloring Suppression Property Evaluation (Difference of YI Value)

The pellet-shaped resin composition (Y) was pulverized by a crusher (SKR16-240, available from Sometani Sangyo Company Limited) at 650 rpm, and thus 1 to 5 mm-square pulverized materials were produced.

The resulting pulverized materials were filled in a cylinder having an internal diameter of 32 mm and a height of 30 mm and the excess was stricken off, and this was fed to yellow index (YI value) measurement before heating by using a spectrocolorimeter (available from Nippon Denshoku Industries Co., Ltd.).

Furthermore, the pulverized materials were subjected to a heat treatment at 60°C for 3 days in an oven in an air atmosphere, and then to measurement of the YI value in the same manner after the heating. The difference between the YI value after the heating and the YI value before the heating was calculated. A larger value means that the resin composition (Y) is colored yellow more after the heating.

The evaluation was performed based on the following criteria.

A (excellent): The difference of the YI values was less than 0.20
B (very good): The difference of the YI values was 0.20 or greater and less than 0.30
C (good): The difference of the YI values was 0.30 or greater and less than 0.40
D (poor): The difference of the YI values was 0.40 or greater

[Table 2]

| | Resin composition (Y) | | | | | | | | Molded body evaluation | | | |
|---|---|---|---|---|---|---|---|---|---|---|---|---|
| | Content of polyolefin resin (C1) (part) | Content of EVOH (D1) (part) | Type of EVA (A) | Content of EVA (A) (part) | Content of saponified EVA (B1) (part) | Content of hydrotalcite (E1) (part) | Content of higher fatty acid metal salt (F1) (part) | Content of titanium compound (GI) (part) | 5% loss temperature | Evaluation | Difference between YI values | Evaluation |
| Example 2-1 | 90.5 | 4.8 | Carbon-14-containing EVA (AI) | 4.027 | 0.237 | 0.237 | 0.237 | 0 | 387.5 | A | 0.04 | A |
| Example 2-2 | 94.9 | 5 | Carbon-14-containing EVA (AI) | 0.084 | 0.084 | 0.005 | 0.005 | 0 | 376.7 | B | 0.29 | B |
| Example 2-3 | 94.1 | 5 | Carbon-14-containing EVA (A1) | 0.837 | 0.837 | 0.049 | 0.049 | 0 | 395.2 | A | 0.11 | A |
| Example 2-4 | 90.5 | 4.8 | Carbon-14-containing EVA (A1) | 3.799 | 0.223 | 0.223 | 0.223 | 0.045 | 382.5 | A | 0.07 | A |
| Example 2-5 | 90.5 | 4.8 | Carbon-14-containing EVA (A1) | 4.264 | 0 | 0.237 | 0.237 | 0 | 384.2 | A | 0.01 | A |
| Comparative Example 2-1 | 90.5 | 4.8 | Petroleum-derived EVA (A2) | 4.027 | 0.237 | 0.237 | 0.237 | 0 | 371.8 | D | 0.40 | D |

The results in Table 2 show that the thermal stabilities and coloring suppression properties of the resin compositions (Y) of Examples 2-1 to 2-5 that used the carbon-14-containing EVA (A1) together with the components (C) to (E) contained in the collected laminate material and the like were improved compared to those of Comparative Example 2-1 that used the petroleum-derived EVA (A2).

This is probably because the carbon-14 ($^{14}$C)-containing EVA has a stronger binding energy due to the primary isotope effect, leading to slowed decomposition and increased thermal stability, as well as synergistic effect of the hydrotalcites (E1) and the higher fatty acid metal salt (F1).

In particular, the comparison between Example 2-1 and Comparative Example 2-1 shows that the coloring suppression properties were remarkably improved in cases where the carbon-14-containing EVA (A1) was used rather than the petroleum-derived EVA (A2).

It is clear that the effect of excelling in thermal stability and coloring suppression properties of the aforementioned Examples 2-1 to 2-5 was similarly achieved even when the blending ratio or type of each component was changed.

Specific embodiments of the present disclosure were described in the above examples, but the above examples are merely illustrative and are not to be construed as limiting. Various modifications apparent to those skilled in the art are intended to be within the scope of the present disclosure.

Industrial Applicability

The present resin composition (X) can enhance thermal stability and coloring suppression properties to a level better than those of a resin composition containing a petroleum-derived EVA. Therefore, a molded body made of the present resin composition (X) and a multilayer structure including a layer containing the present resin composition (X) are useful as packages as materials for various packaging containers, and food packages. Furthermore, the present resin composition (X) is useful as a recycling agent for a collected resin material containing a polyolefin resin and an EVOH.

Furthermore, the present resin composition (Y) can enhance thermal stability and coloring suppression properties to a level better than those of a resin composition containing a petroleum-derived EVA. Therefore, a molded body made of the present resin composition (Y) and a multilayer structure including a layer containing the present resin composition (Y) are useful as packages as materials for various packaging containers, and food packages. In particular, the present resin composition (Y) is useful as a recycled resin composition using a collected resin material containing a polyolefin resin and an EVOH.

**Claims**

1. A resin composition (X) comprising an ethylene-vinyl acetate copolymer (A), wherein the ethylene-vinyl acetate copolymer (A) contains carbon-14.

2. A resin composition (X) comprising:

   an ethylene-vinyl acetate copolymer (A); and
   a saponified ethylene-vinyl acetate copolymer (B) having an ethylene content of greater than 60 mol%,
   wherein the ethylene-vinyl acetate copolymer (A) and/or the saponified ethylene-vinyl acetate copolymer (B) contain carbon-14.

3. The resin composition (X) according to claim 2, wherein the ethylene-vinyl acetate copolymer (A) contains carbon-14.

4. The resin composition (X) according to claim 2, wherein a biobased content of the ethylene-vinyl acetate copolymer (A) and/or the saponified ethylene-vinyl acetate copolymer (B) having an ethylene content of greater than 60 mol% is from 1 to 100%.

5. The resin composition (X) according to claim 1 or 2, wherein a biobased content of the ethylene-vinyl acetate copolymer (A) is from 1 to 100%.

6. The resin composition (X) according to claim 1 or 2, wherein a biobased content of the ethylene-vinyl acetate copolymer (A) is from 40 to 100%.

7. The resin composition (X) according to claim 1 or 2, wherein an ethylene content of the ethylene-vinyl acetate copolymer (A) is from 60 to 98 mol%.

8. A resin composition for a recycling agent, wherein the resin composition comprises the resin composition (X) according to claim 1 or 2.

9. Use of the resin composition (X) according to claim 1 or 2 for a recycling agent.

10. A recycling agent comprising the resin composition (X) according to claim 1 or 2.

11. The resin composition (X) according to claim 1 or 2, further comprising a polyolefin resin (C).

12. The resin composition (X) according to claim 1 or 2, further comprising an ethylene-vinyl alcohol copolymer (D) having an ethylene content of 60 mol% or less.

13. A resin composition (Y) comprising:

   an ethylene-vinyl acetate copolymer (A);
   a polyolefin resin (C); and
   an ethylene-vinyl alcohol copolymer (D),
   wherein the ethylene-vinyl acetate copolymer (A) contains carbon-14.

14. A resin composition (Y) comprising:

   an ethylene-vinyl acetate copolymer (A);
   a saponified ethylene-vinyl acetate copolymer (B) having an ethylene content of greater than 60 mol%;
   a polyolefin resin (C); and
   an ethylene-vinyl alcohol copolymer (D),
   wherein the ethylene-vinyl acetate copolymer (A) and/or the saponified ethylene-vinyl acetate copolymer (B) contains carbon-14.

15. The resin composition (Y) according to claim 13 or 14, further comprising hydrotalcites (E).

16. The resin composition (Y) according to claim 13 or 14, further comprising a higher fatty acid metal salt (F).

17. The resin composition (Y) according to claim 16, wherein the higher fatty acid metal salt (F) is at least one selected from the group consisting of a higher fatty acid calcium salt, a higher fatty acid magnesium salt, and a higher fatty acid zinc salt.

18. The resin composition (Y) according to claim 13 or 14, further comprising a titanium compound (G).

19. The resin composition (Y) according to claim 18, wherein the titanium compound (G) is titanium oxide.

20. A regrind layer comprising the recycling agent according to claim 10.

21. A multilayer structure comprising the regrind layer according to claim 20.

22. The multilayer structure according to claim 21, further comprising a layer containing a polyolefin resin, wherein the layer does not contain the ethylene-vinyl acetate copolymer (A).

23. The multilayer structure according to claim 21, further comprising an adhesive resin layer that is different from the regrind layer, wherein the adhesive resin layer does not contain the ethylene-vinyl acetate copolymer (A).

24. A package comprising the multilayer structure according to claim 21.

25. A food package comprising the multilayer structure according to claim 21.

26. A method for producing a recycling agent, the method comprising mixing an ethylene-vinyl acetate copolymer (A) and a saponified ethylene-vinyl acetate copolymer (B) having an ethylene content of greater than 60 mol%, wherein the ethylene-vinyl acetate copolymer (A) and/or the saponified ethylene-vinyl acetate copolymer (B) contains carbon-14.

27. A method for producing a regrind layer by forming a resin composition, the method comprising mixing a polyolefin resin (C), an ethylene-vinyl alcohol copolymer (D), an ethylene-vinyl acetate copolymer (A), and a saponified ethylene-vinyl acetate copolymer (B) having an ethylene content of greater than 60 mol%, wherein the resin composition contains the ethylene-vinyl acetate copolymer (A) and/or the saponified ethylene-vinyl acetate copolymer (B) containing carbon-14.

## INTERNATIONAL SEARCH REPORT

| International application No. |
|---|
| **PCT/JP2024/026737** |

**A.    CLASSIFICATION OF SUBJECT MATTER**

*C08L 23/08*(2006.01)i; *B32B 27/28*(2006.01)i; *C08K 3/22*(2006.01)i; *C08K 5/098*(2006.01)i; *C08L 23/02*(2006.01)i; *C08L 29/04*(2006.01)i

FI:    C08L23/08 ZAB; C08K3/22; C08K5/098; B32B27/28 102; C08L29/04 S; C08L23/02

According to International Patent Classification (IPC) or to both national classification and IPC

**B.    FIELDS SEARCHED**

Minimum documentation searched (classification system followed by classification symbols)

C08L23/08; B32B27/28; C08K3/22; C08K5/098; C08L23/02; C08L29/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2022-032037 A (KURARAY CO., LTD.) 24 February 2022 (2022-02-24)<br>claims, paragraph [0132], examples | 1, 5-6 |
| X | JP 2021-536526 A (BRASKEM S.A.) 27 December 2021 (2021-12-27)<br>claims, paragraphs [0039]-[0040], [0044], examples (in particular, examples 7-9) | 1, 5-7, 11 |
| X | JP 2023-511750 A (SHOWALTER, Edward) 22 March 2023 (2023-03-22)<br>paragraphs [0080]-[0082], [0086] | 1, 5-6, 11 |
| A | JP 2009-097010 A (THE NIPPON SYNTHETIC CHEMICAL INDUSTRY CO., LTD.) 07 May 2009 (2009-05-07)<br>claims, examples | 1-27 |

☐ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **01 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/026737**

| Box No. III | Observations where unity of invention is lacking (Continuation of item 3 of first sheet) |
| --- | --- |

This International Searching Authority found multiple inventions in this international application, as follows:

(Invention 1)
In the invention in claims 1, 13, and dependent claims thereof, and the invention in claims 2, 14, and 26-27 and dependent claims thereof, ethylene-vinyl acetate copolymer (A) contains carbon 14
(Invention 2)
In the invention in claims 2, 14, 26-27, and dependent claims thereof, ethylene-vinyl acetate copolymer (A) does not contain carbon 14

Inventions 1 and 2 share, the common technical feature of "containing an ethylene-vinyl acetate copolymer (A)." (claim 1 of the present invention) However, since the technical feature does not make a contribution over the prior art that there is no need to cite any documents, it cannot be said that the technical feature is a special technical feature.
(As described, for example, in document 1 (JP 2022-032037 A (claims, paragraph [0132], examples, etc.)), document 2 (JP 2021-536526 A (claims, examples (in particular, examples 7-9), etc.)), document 3 (JP 2023-511750 A (paragraphs [0080]-[0082], [0086], etc.)), the technical feature in which an ethylene-vinyl acetate copolymer is contained, or that the ethylene-vinyl acetate copolymer contains carbon 14 is known prior to the filing of the present application.
Therefore, it cannot be said that inventions 1 and 2 have a special technical feature identical or corresponding to each other.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/026737**

| Patent document cited in search report | | | Publication date (day/month/year) | Patent family member(s) | | Publication date (day/month/year) |
|---|---|---|---|---|---|---|
| JP | 2022-032037 | A | 24 February 2022 | US 2023/0250269 A1 claims, paragraph [0803], examples<br>WO 2022/004701 A1<br>EP 4173823 A1<br>CN 115715308 A<br>KR 10-2023-0030654 A | | |
| JP | 2021-536526 | A | 27 December 2021 | US 2020/0079939 A1 claims, paragraphs [0043]-[0045], [0049], examples (in particular, examples 7-9)<br>WO 2020/049366 A1<br>EP 3847214 A1<br>CN 112912434 A<br>KR 10-2021-0068443 A | | |
| JP | 2023-511750 | A | 22 March 2023 | US 2021/0238390 A1 paragraphs [0080]-[0082], [0086]<br>WO 2021/154446 A1<br>EP 4097175 A1<br>KR 10-2022-0149528 A<br>CN 115362202 A | | |
| JP | 2009-097010 | A | 07 May 2009 | US 2010/0255330 A1 claims, examples<br>WO 2009/041440 A1<br>EP 2194093 A1<br>CN 101809082 A | | |

Form PCT/ISA/210 (patent family annex) (July 2022)

**REFERENCES CITED IN THE DESCRIPTION**

**Patent documents cited in the description**

- WO 2009041440 A

- JP 2021536526 T